# EUROPÄISCHE PATENTSCHRIFT

(11) **EP 3 724 044 B1**
(45) Veröffentlichungstag und Bekanntmachung des Hinweises auf die Patenterteilung: **15.03.2023**
(21) Anmeldenummer: 18769139.9
(22) Anmeldetag: 10.09.2018
(51) Int. Cl.: B60T 13/26, B60T 13/38, B60T 15/24, B60T 15/60

(54) **PNEUMATISCHE VENTILANORDNUNG FÜR EIN ANHÄNGEFAHRZEUG**
PNEUMATIC VALVE ARRANGEMENT FOR A TRAILER VEHICLE
DISPOSITIF DE SOUPAPE PNEUMATIQUE POUR UN VÉHICULE REMORQUE

(30) Priorität: 13.12.2017 DE 102017011548
(43) Veröffentlichungstag der Anmeldung: 21.10.2020
(73) Patentinhaber: ZF CV Systems Europe BV, 1170 Brussels (BE)
(72) Erfinder: SIEKER, Armin, 33611 Bielefeld (DE); STENDER, Axel, 31787 Hameln (DE)
(74) Vertreter: Ohlendorf, Henrike
(86) Internationale Anmeldenummer: PCT/EP2018/074320
(87) Internationale Veröffentlichungsnummer: WO 2019/115030

(56) Entgegenhaltungen:
- EP-A2- 1 914 137
- DE-A1-102010 037 349
- US-A- 5 236 250

## Beschreibung

Die Erfindung betrifft eine pneumatische Ventilanordnung für ein Anhängefahrzeug mit Vorratsbehälter als Energiespeicher einer Betriebsbremseinrichtung, Notbremseinrichtung und Federspeicherbremsen.

Aus der unter dem Link http://www.wabco.info/8150200033 (im November 2017) abrufbaren Druckschrift "Systeme und Komponenten in Nutzfahrzeugen", Ausgabe 2, Version 3/12.2011 (de), S. 65-67 ist eine pneumatische Ventilanordnung für Anhängefahrzeuge mit automatischer Blockierverhinderung und mit folgenden Merkmalen bekannt:
a) ein Versorgungsanschluss zur Verbindung mit einer durch ein Zugfahrzeug gespeisten Druckluftversorgung,
b) ein Vorratsbehälteranschluss zur Verbindung mit dem Vorratsbehälter,
c) ein Notbrems-Druckanschluss zur Verbindung mit einer Notbremseinrichtung,
d) ein Federspeicher-Druckanschluss zur Verbindung mit den Federspeicherbremsen,
e) ein Entlüftungsanschluss,
f) ein Rückschlagventil zwischen Vorratsbehälteranschluss und Federspeicher-Druckanschluss, mit einer Sperrwirkung zum Halten eines Drucks in den Federspeicherbremsen.

Die Notbremseinrichtung ist ein Ventil oder eine Ventilkombination zum Auslösen einer automatischen Zwangsbremsung bei Abriss der Druckluftversorgung (Vorratsleitung) bzw. bei Verlust des Vorratsdrucks und wird in der genannten Druckschrift als Anhängerbremsventil bezeichnet.

Das Rückschlagventil verhindert einen Abfluss der Druckluft aus Lösekammern der Federspeicherbremsen, auch wenn der Druck im Vorratsbehälter kurzzeitig einbricht. Derartige Druckschwankungen können bei Leckagen oder Bremsungen mit automatischer Blockierverhinderung auftreten.

Diese Funktion des Rückschlagventils wirkt auch bei einem abgestellten Anhängefahrzeug, bei dem ein vorhandenes Parkventil in seiner Fahrstellung verbleibt. Der Luftdruck in den Lösekammern der Federspeicherbremsen und in den Betriebsbremsen wird dann aus dem Vorratsbehälter gespeist. Wenn ein derart abgestelltes Anhängefahrzeug Vorratsbehälterdruck verliert und die Lösekammern der Federspeicherbremsen aufgrund des Rückschlagventils den Druck halten, beginnen sich die durch die automatische Zwangsbremsung aktivierten Betriebsbremsen zu lösen und das Anhängefahrzeug kann sich in Bewegung setzen, wenn es beispielsweise auf geneigter Fahrbahn abgestellt ist.

Zur Sicherung des abgestellten Anhängefahrzeugs soll der Bediener das Parkventil betätigen ("ziehen"). Dadurch werden die Lösekammern der Federspeicherbremsen in die Atmosphäre entlüftet. Das Anhängefahrzeug wird so durch die Federspeicherbremsen gehalten. Wenn nun der Bediener vergisst das Parkventil des abgestellten Anhängefahrzeugs zu betätigen und das Anhängefahrzeug auf geneigter Fahrbahn steht oder durch ein rangierendes Fahrzeug angestoßen wird, kann sich das Anhängefahrzeug - wie oben beschrieben - in Bewegung setzen. Die Sperrwirkung des Rückschlagventils ist in Verbindung mit diesen Randbedingungen nachteilig.

DE 10 2010 037 349 A1 offenbart ein Parkventil für einen Nutzfahrzeug-Anhänger, wobei das Parkventil ein Drucksicherungsventil besitzt. Das Drucksicherungsventil ist in einer Belüftungsstellung des Parkventils zwischen den Versorgungsanschluss und den Ausgangsanschluss zwischengeschaltet. Das Drucksicherungsventil sichert in der Belüftungsstellung einen Druck an dem Ausgangsanschluss gegenüber einem Druckabfall an dem Versorgungsanschluss, wobei die Wirkung des Drucksicherungsventils aufgehoben ist, wenn der Druck an dem Versorgungsanschluss oder die Druckdifferenz zwischen dem Druck am Versorgungsanschluss und dem Druck am Ausgangsanschluss einen Schwellenwert unterschreitet. Hierdurch kann ein ungewolltes Betätigen der Parkbremse bei Druckluftschwankungen an dem Versorgungsanschluss vermieden werden.

Aus den Druckschriften EP 1 504 976 B1, EP 1 188 634 B1 und EP 2 193 965 B1 sind Anhängerbremsventile als Notbremseinrichtung für Anhängefahrzeuge bekannt, mit integriertem Rückschlagventil und Aufhebung der Sperrwirkung des Rückschlagventils bei Verlust des Vorratsdrucks bzw. bei Abriss der Vorratsleitung. Nachteilig ist aber die hohe Integration des Rückschlagventils in das Anhängerbremsventil. Außerdem ist das zumindest in den Druckschriften EP 1 504 976 B1 und EP 2 193 965 B1 dargestellte Rückschlagventil besonders aufwendig konstruiert, nämlich als an doppelten Gelenkhebeln gehaltenes Kippelement.

EP 1 914 137 A2 offenbart ein Anhängerbremsventil. Das Anhängerbremsventil weist einen Parkanschluss für ein Parkventil auf, wobei unter Umgehung eines Rückschlagventils Vorratsbehälterdruck in Federspeicher-Lösekammern eingespeist werden kann. Die Umgehung des Rückschlagventils erfolgt mittels eines Bypasskanals, der in einer Ventil-Grundstellung des Anhängerbremsventils ohne Bedeutung ist, da er über die in diesem Schaltzustand wirksamen Wege abgeschlossen ist. In einer Ventil-Abrissstellung werden jedoch Wege der Ventil-Abrissstellung wirksam und der Vorratsbehälterdruck liegt über den Bypasskanal direkt am Parkanschluss an.

Aufgabe der vorliegenden Erfindung ist die Verbesserung der eingangs genannten pneumatischen Ventilanordnung im Hinblick auf die Funktion des Rückschlagventils.

Zur Lösung der Aufgabe weist die erfindungsgemäße pneumatische Ventilanordnung die Merkmale des Anspruchs 1 auf. Insbesondere ist die Sperrwirkung des Rückschlagventils aufhebbar. Dadurch schafft die von der Notbremseinrichtung getrennte Ventilanordnung ein hohes Maß an Sicherheit. Als Notbremseinrichtung ist ein Ventil oder eine Ventilkombination zum automatischen Auslösen einer Zwangsbremsung bei Abriss der Druckluftversorgung (Vorratsleitung) bzw. bei Verlust des Vorratsdrucks vorgesehen. Die Notbremseinrichtung kann auch als Anhängerbremsventil bezeichnet werden oder Teil eines Anhängerbremsventils mit weiteren Funktionen sein, die je nach Schaltzustand die automatische Zwangsbremsung aktiviert oder deaktiviert.

Die Sperrwirkung des Rückschlagventils ist unabhängig von wenigstens einem der nachfolgenden Kriterien aufhebbar:
- Schaltzustand der Notbremseinrichtung,
- Druck am Notbrems-Druckanschluss.

Eines oder beide Kriterien sollen erfüllt sein. Dadurch ergibt sich eine noch bessere funktionale Trennung der Ventilanordnung mit Rückschlagventil von der Notbremseinrichtung.

Nach einem weiteren Gedanken der Erfindung sind in die Ventilanordnung ein Parkventil und/oder ein Löseventil integriert, das heißt, die beiden Ventile oder eines derselben sind Bestandteile der Ventilanordnung. Durch die Integration ergibt sich insgesamt ein geringerer Platzbedarf. Auch ist die Installation einfacher und mit verminderter Gefahr von Schaltungsfehlern durchführbar.

Nach einem weiteren Gedanken der Erfindung sind in die Ventilanordnung ein Parkventil und ein Löseventil integriert, wobei
a) ein Anschluss des Löseventils dem Versorgungsanschluss zugeordnet ist,
b) ein Anschluss des Löseventils dem Notbrems-Druckanschluss zugeordnet ist,
c) ein Anschluss des Löseventils mit einem Anschluss des Parkventils verbindbar ist,
d) ein Anschluss des Parkventils dem Federspeicher-Druckanschluss zugeordnet ist,
e) ein Anschluss des Parkventils dem Entlüftungsanschluss zugeordnet ist.

Nach einem weiteren Gedanken der Erfindung sind in die Ventilanordnung ein Parkventil und ein Löseventil integriert, wobei das Rückschlagventil in einer Leitung oder in einem Ventil zwischen Parkventil und Löseventil vorgesehen ist. Auch dies verringert Platzbedarf und Fehler bei der Installation.

Nach einem weiteren Gedanken der Erfindung ist das Rückschlagventil integriert in ein Wegeventil mit mindestens zwei Anschlüssen und mindestens zwei Schaltstellungen. Auch dies erhöht die Sicherheit bei der Installation.

Nach einem weiteren Gedanken der Erfindung ist das Rückschlagventil parallel zu einem Wegeventil vorgesehen. Dadurch ergibt sich ein besonders einfacher Aufbau der einzelnen Bestandteile. Auch können preiswerte Standardbauteile als Wegeventil und Rückschlagventil verwendet werden.

Vorteilhafterweise ist ein Steueranschluss des Wegeventils mit dem Versorgungsanschluss verbunden.

Alternativ ist ein Steueranschluss des Wegeventils mit dem Notbrems-Druckanschluss verbunden.

Ebenfalls alternativ ist ein Steueranschluss des Wegeventils mit dem Vorratsbehälteranschluss verbunden. Die Funktion des Rückschlagventils ist je nach Zuordnung des Steueranschlusses einstellbar.

Nach einem weiteren Gedanken der Erfindung ist das Wegeventil ein 2/2-Wegeventil mit den Funktionen "Durchlass" und "gesperrt".

Gegenstand der Erfindung ist auch eine pneumatische Bremsanlage mit der voranstehend erörterten Ventilanordnung. Schließlich ist Gegenstand der Erfindung auch ein Anhängefahrzeug mit pneumatischer Bremsanlage.

Weitere Merkmale der Erfindung ergeben sich aus der Beschreibung im Übrigen und aus den Ansprüchen. Vorteilhafte Ausführungsformen der Erfindung werden nachfolgend anhand von Zeichnungen näher erläutert. Es zeigen:
- Fig. 1: ein Schaltbild einer ersten Variante einer Bremsanlage für einen Anhänger mit Antiblockierregelung (Blockierverhinderung),
- Fig. 2: eine Ventilanordnung der ersten Variante,
- Fig. 3: eine Untervariante zur ersten Variante,

- Fig. 4: ein Schaltbild einer zweiten Variante einer Bremsanlage,
- Fig. 5: eine Ventilanordnung der zweiten Variante,
- Fig. 6: eine Untervariante zur zweiten Variante,

- Fig. 7: ein Schaltbild einer dritten Variante einer Bremsanlage,
- Fig. 8: eine Ventilanordnung der dritten Variante,
- Fig. 9: eine Untervariante zur dritten Variante.

Eine Ventilanordnung 10 weist (unter Verwendung des genormten Anschlussnummerncodes) einen Versorgungsanschluss 1-1, einen Vorratsbehälteranschluss 1-2, einen Notbrems-Druckanschluss 21, einen Federspeicher-Druckanschluss 22 und einen Entlüftungsanschluss 3 auf. In die Ventilanordnung 10 integriert sind ein Löseventil 40, ein Parkventil 41 und ein Rückschlagventil 42.

Die Ventilanordnung 10 ist hier Teil einer pneumatischen Bremsanlage für ein Anhängefahrzeug mit Antiblockierregelung. Weitere Bestandteile der Bremsanlage 43 sind unter anderem ein Vorratsbehälter 44, ein Anhängerbremsventil als Notbremseinrichtung 45, Federspeicherbremsen 46, Betriebsbremsen 47, ein Druckluftanschluss "Bremse" 48, ein Druckluftanschluss "Vorrat" 49, ein Oder-Ventil 50 und ein Antiblockier-Relaisventil 51. Eine wesentliche Besonderheit ist die deutliche räumliche Trennung von Notbremseinrichtung 45 und Ventilanordnung 10. Letztere kann auch als Park-Löse-Ventil bezeichnet werden.

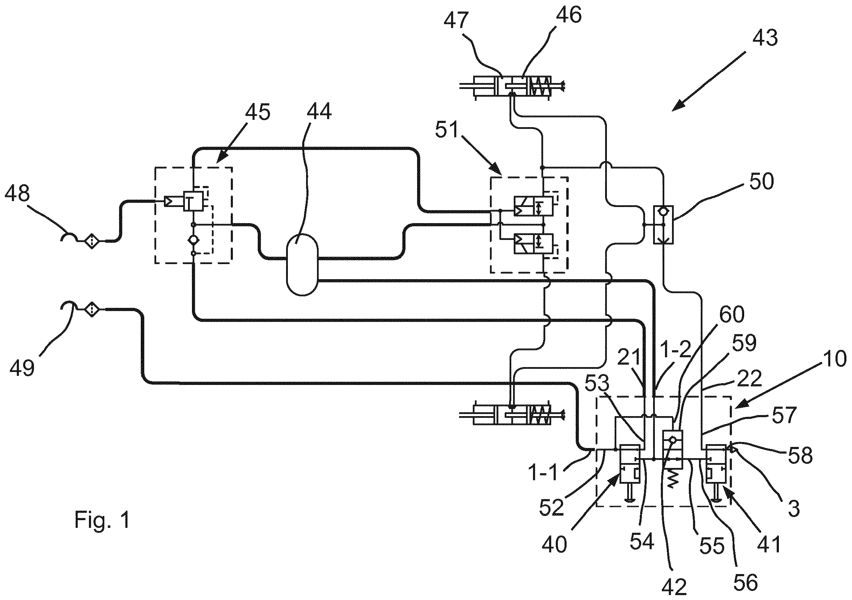

Zur Erläuterung einer ersten Variante der erfindungsgemäßen Ventilanordnung wird Bezug genommen auf die Figuren 1 bis 3:
Das Löseventil 40 ist vorzugsweise ein 3/2-Wegeventil und weist einen Anschluss 52 zur Verbindung mit dem Versorgungsanschluss 1-1, einen Anschluss 53 zur Verbindung mit dem Notbrems-Druckanschluss 21 und einen Anschluss 54 zur Verbindung mit einer zum Parkventil 41 führenden Leitung 55 sowie zum Vorratsbehälteranschluss 1-2 auf. Das Parkventil 41 ist ebenfalls vorzugsweise ein 3/2-Wegeventil, mit einem Anschluss 56 zur Verbindung mit der Leitung 55, einem Anschluss 57 zur Verbindung mit dem Federspeicher-Druckanschluss 22 und einem Anschluss 58 zur Verbindung mit dem Entlüftungsanschluss 3 auf.

Gemäß Fig. 1 ist in der Leitung 55 zwischen Löseventil 40 und Parkventil 41 ein 2/2-Wegeventil 59 vorgesehen, mit einem Steueranschluss 60, welcher mit dem Versorgungsanschluss 1-1 verbunden ist. Sofern der Versorgungsanschluss 1-1 drucklos ist, schaltet das 2/2-Wegeventil 59 in die Position gemäß Fig. 1, sodass die Leitung 55 durchgängig ist. Bei ausreichend Druck am Versorgungsanschluss 1-1 schaltet das 2/2-Wegeventil in seine andere Schaltstellung, in der das integrierte Rückschlagventil 42 wirksam ist und bei Druckabfall im Vorratsbehälter 44 eine Strömung zum Vorratsbehälter 44 verhindert. Hierzu muss sich das Parkventil 41 in Fahrstellung befinden. In Fig. 1 befindet sich das Parkventil 41 in Parkstellung.

Das Löseventil 40 befindet sich in Fig. 1 in seiner Fahrstellung.

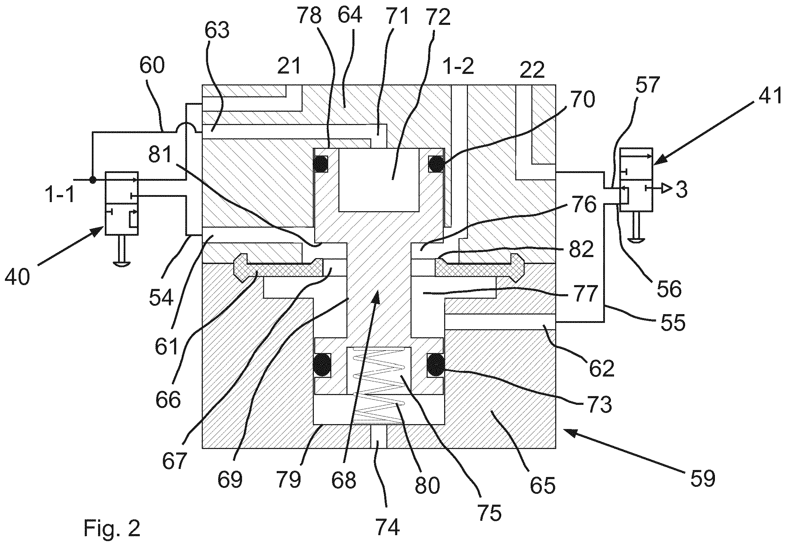

Details des 2/2-Wegeventils 59 ergeben sich aus Fig. 2. Da das 2/2-Wegeventil in die Ventilanordnung 10 integriert ist, sind in Fig. 2 zusätzlich zu Eingängen 61, 62 auch weitere Anschlüsse vorgesehen. Eingang 61 ist mit dem Anschluss 54 verbunden, Eingang 62 mit der Leitung 55. Die beiden Eingänge 61, 62 markieren die beiden "Wege" des 2/2-Wegeventils 59. An einem Steuereingang 63 liegt der Steueranschluss 60.

Das Ventil 59 weist ein Gehäuse mit einer oberen Gehäusehälfte 64 und einer unteren Gehäusehälfte 65 auf. Zwischen den Gehäusehälften 64, 65 ist eine Dichtmembran 66 gehalten, welche mittig eine Öffnung 67 aufweist. Ein Schaltelement 68 ist im Wesentlichen zylindrisch ausgebildet und weist etwa mittig eine Einschnürung 69, an einem oberen Ende eine umlaufende Dichtung 70 und eine nach oben zu einem Steuerkanal 71 offene Aussparung 72 auf. An einem unteren Ende sind eine umlaufende Dichtung 73 und eine nach unten in Richtung auf einen Entlüftungskanal 74 offene Aussparung 75 vorgesehen.

Die beiden Gehäusehälften 64, 65 weisen zur Aufnahme von oberem und unterem Ende des Schaltelements 68 entsprechende Hohlräume 76, 77 auf, die durch die Dichtmembran 66 voneinander getrennt sind. Der obere Hohlraum 76 weist einen Anschlag 78 für das Schaltelement 68 auf, analog dazu der untere Hohlraum 77 einen Anschlag 79. Im unteren Hohlraum 77 ist koaxial zum Schaltelement 68 eine Rückstellfeder 80 (Druckfeder) vorgesehen. Diese erstreckt sich mit einem Teil ihrer Länge in die Aussparung 75 und liegt koaxial zum Entlüftungskanal 74 am Anschlag 79 an. Durch den Druck im Steuerkanal 71 und die Kraft der Rückstellfeder 80 wird das Schaltelement 68 auf- oder abbewegt.

Richtungsangaben, wie "oben", "unten", "auf, "ab", "links" und "rechts" beziehen sich nur auf die Darstellung in den Zeichnungen und sind in der Praxis abhängig von der Einbaulage der einzelnen Bauteile.

Das Schaltelement 68 befindet sich mit seiner Einschnürung 69 auf Höhe der Dichtmembran 66 und weist oberhalb der Einschnürung 69 eine abwärtsgerichtete Dichtfläche 81 auf, welche mit einer aufwärtsgerichteten Dichtlinie 82 der Dichtmembran 66 zusammenwirken kann.

In Fig. 2 befindet sich das 2/2-Wegeventil 59 mit dem Schaltelement 68 in der Schaltstellung gemäß Fig. 1, also mit Durchlass ohne Rückschlagfunktion. Dabei liegt das Schaltelement 68 am oberen Anschlag 78 an. Dichtfläche 81 und Dichtlinie 82 weisen zueinander einen Abstand auf. Eine Strömung vom Vorratsbehälteranschluss 1-2 zur Leitung 55 und weiter zum Parkventil 41 ist möglich, ebenso vom Anschluss 54 bzw. vom Löseventil 40 zum Vorratsbehälteranschluss 1-2 und zur Leitung 55. Hierzu liegt am Versorgungsanschluss 1-1 kein Druck an. Die Rückstellfeder 80 drückt das Schaltelement 68 gegen den Anschlag 78.

Bei ausreichend Druck am Versorgungsanschluss 1-1 befindet sich das Schaltelement 68 in nicht gezeigter Rückschlagstellung und liegt am Anschlag 79 an. Auch liegt die Dichtlinie 82 an der Dichtfläche 81 an. Die Dichtmembran 66 ist so eingebaut bzw. zwischen den beiden Gehäusehälften 64, 65 gehalten, dass eine Nachgiebigkeit nach unten in Richtung auf den Eingang 62 gegeben ist. Bei ausreichendem Druck am Anschluss 54 und/oder am Vorratsbehälteranschluss 1-2 kann die Dichtmembran 66 nachgeben und in Richtung auf die Leitung 55 öffnen. Bei entsprechender Stellung des Parkventils 41 und/oder des Löseventils 40 ergeben sich so Durchgänge vom Vorratsbehälteranschluss 1-2 zum Federspeicher-Druckanschluss 22 bzw. vom Notbrems-Druckanschluss 21 zum Federspeicher-Druckanschluss 22. In umgekehrter Richtung sperrt die Dichtmembran 66 den Strömungsweg. Die Sperrwirkung wird nur bei drucklosem Versorgungsanschluss 1-1 aufgehoben.

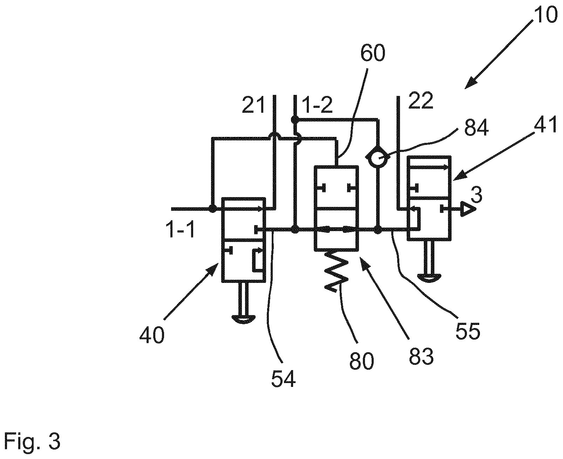

Fig. 3 zeigt eine Untervariante zur ersten Variante. Entsprechend der ersten Variante erfolgt die Steuerung über den Druck am Versorgungsanschluss 1-1. Anstelle des 2/2-Wegeventils 59 mit integriertem Rückschlagventil ist jedoch nur ein einfaches 2/2-Wegeventil 83 vorgesehen, welches je nach Schaltstellung in beide Strömungsrichtungen entweder durchlässt oder sperrt. Ein Rückschlagventil 84 ist deshalb parallel zum 2/2-Wegeventil 83 angeordnet, nämlich zwischen der Leitung 55 und dem Vorratsbehälteranschluss 1-2. Bei drucklosem Versorgungsanschluss 1-1 ergibt sich die Schaltstellung gemäß Fig. 3 mit durchgängigem 2/2-Wegeventil 83, sodass dann das Rückschlagventil 84 umgangen wird und wirkungslos ist. Das Parkventil 41 ist in Fig. 3 in Fahrstellung gezeigt, ebenso das Löseventil 40.

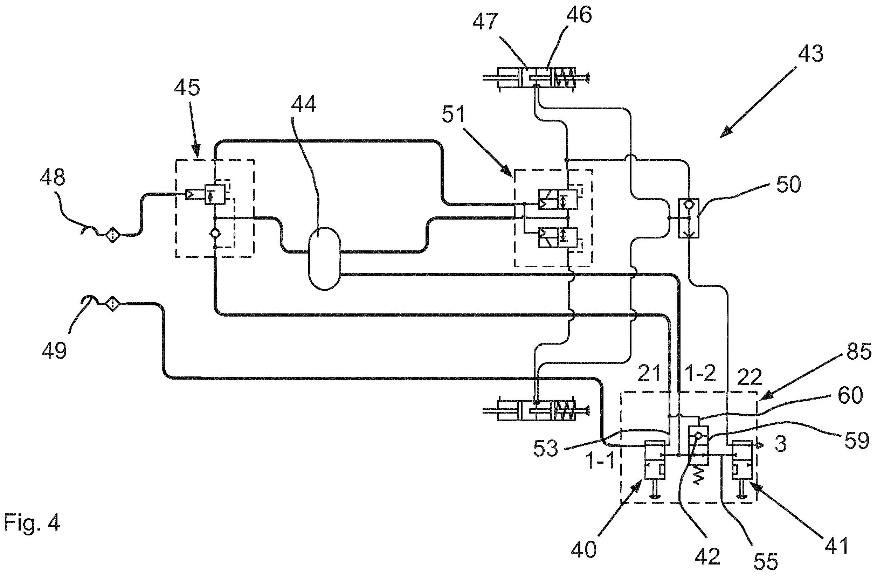

Eine zweite Variante, nämlich eine erfindungsgemäße Ventilanordnung 85, zeigen die Figuren 4 bis 6. Soweit gleiche Teile wie in den Figuren 1 bis 3 vorhanden sind, sind auch die gleichen Bezugszeichen angegeben.

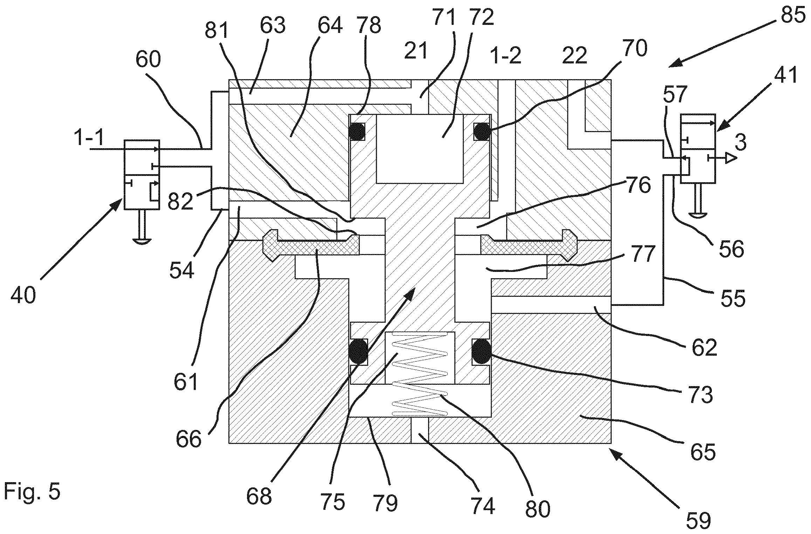

Anders als in den Figuren 1 und 2 ist in Fig. 4 der Steueranschluss 60 mit dem Anschluss 53 bzw. mit dem Notbrems-Druckanschluss 21 verbunden. Dadurch ergibt sich die Sperrwirkung des in das 2/2-Wegeventil 59 integrierten Rückschlagventils 42 nur, wenn am Notbrems-Druckanschluss 21 ausreichender Druck anliegt. Die Sperrwirkung des Rückschlagventils 42 ist aufgehoben, siehe Figuren 4 und 5, wenn sich das Löseventil in der gezeigten Fahrstellung befindet und der Versorgungsanschluss 1-1 drucklos ist.

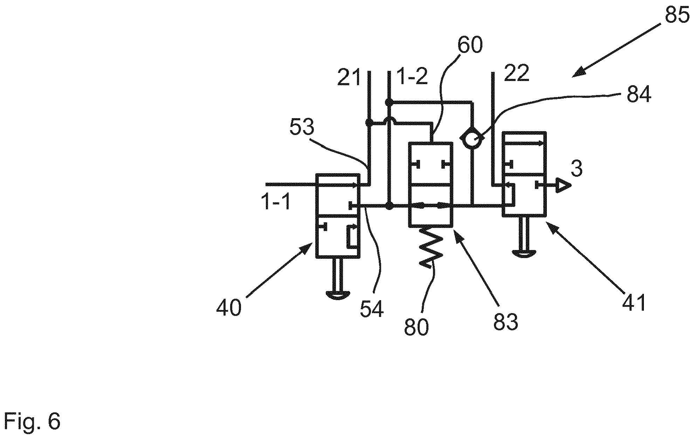

In der Untervariante gemäß Fig. 6 liegt die gleiche Funktionsweise wie in den Figuren 4 und 5 vor. Nur ist das Rückschlagventil 84 (wie in Fig. 3) getrennt vom 2/2-Wegeventil 83 angeordnet bzw. parallel zu diesem geschaltet.

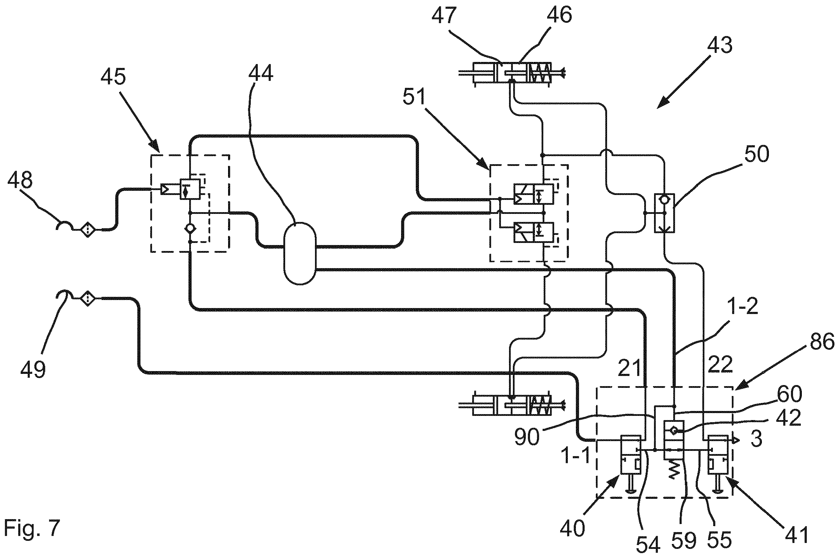

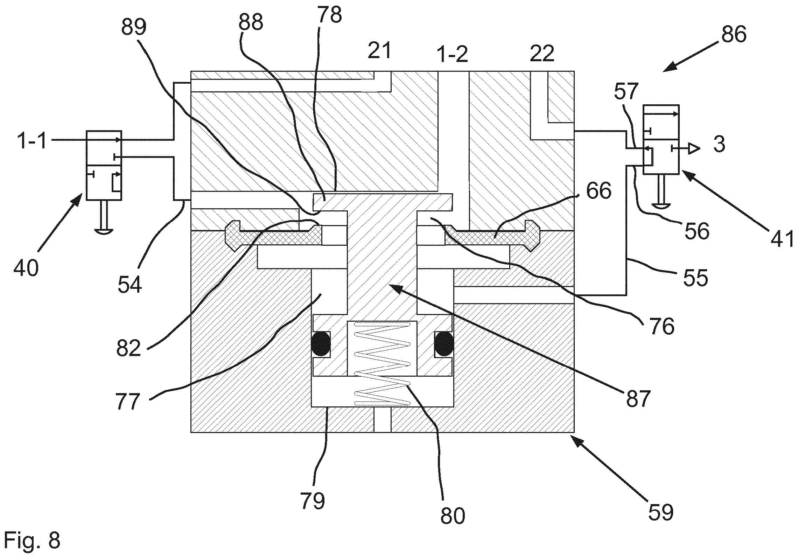

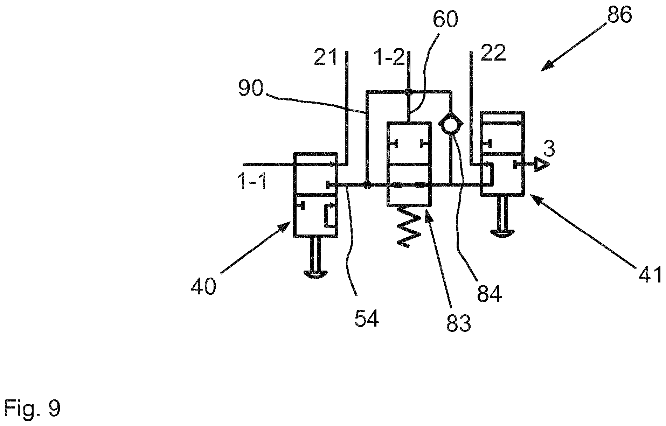

Eine dritte Variante zeigen die Figuren 7 und 8, mit Untervariante in Fig. 9. Soweit möglich, sind auch hier die gleichen Bezugszeichen beibehalten.

Wie in Fig. 7 dargestellt, ist der Steueranschluss 60 mit dem Vorratsbehälteranschluss 1-2 verbunden. Außerdem besteht eine Verbindung vom Steueranschluss 60 zum Anschluss 54 des Löseventils 40. Ein Schaltelement 87 ist anders ausgebildet als in den ersten beiden Varianten der Figuren 2 und 5. Das Schaltelement 87 weist nämlich an seinem oberen Ende keine Dichtung und keine Aussparung auf. Nur das untere Ende ist wie in den Figuren 2 und 5 gestaltet. Stattdessen weist das obere Ende einen umlaufenden Kragen 88 mit abwärtsgerichteter Dichtfläche 89 auf, analog zur Dichtfläche 81.

Der Hohlraum 76 um das obere Ende des Schaltelements 87 herum ist mit dem Vorratsbehälteranschluss 1-2 einerseits und dem Anschluss 54 zum Löseventil 40 andererseits verbunden. Bei drucklosem Vorratsbehälteranschluss 1-2 und dem Löseventil 40 in der gezeigten Fahrstellung befindet sich das Schaltelement 87 aufgrund der Kraft der Rückstellfeder 80 in seiner oberen Position, nämlich am Anschlag 78. Sofern am Vorratsbehälteranschluss 1-2 ausreichend hoher Druck anliegt, wirkt der Druck auch im Hohlraum 77 und bewegt das Schaltelement 87 abwärts gegen den Anschlag 79. Dabei gelangt die Dichtfläche 89 zur Anlage an der Dichtlinie 82, sodass die Rückschlagfunktion aktiviert ist. Sofern der Druck in der Leitung 55 zwischen Parkventil 41 und 2/2-Wegeventil 59 größer ist als der Druck am Vorratsbehälteranschluss 1-2, sperrt das integrierte Rückschlagventil 42. Da der Vorratsbehälteranschluss 1-2 in diesem Fall auch dem Steueranschluss 60 zugeordnet ist, gelangt das Schaltelement 87 dann in die Position der Fig. 8, sodass das Rückschlagventil 42 nicht mehr aktiv ist, wie auch in Fig. 7 dargestellt. Genau wie in den voranstehenden Varianten hat auch hier die Dichtmembran 66 die Funktion des Rückschlagventils 42.

In der Untervariante der Fig. 9 sind wie in den Figuren 3 und 6 Rückschlagventil 84 und 2/2-Wegeventil 83 voneinander getrennt, nämlich parallel geschaltet, zusätzlich zur Verbindung 90 vom Steueranschluss 60 zum Anschluss 54.

**Bezugszeichenliste**

| | | | |
|---|---|---|---|
| 10 | Ventilanordnung | 66 | Dichtmembran |
| 1-1 | Versorgungsanschluss | 67 | Öffnung |
| 1-2 | Vorratsbehälteranschluss | 68 | Schaltelement |
| 21 | Notbrems-Druckanschluss | 69 | Einschnürung |
| 22 | Federspeicher-Druckanschluss | 70 | Dichtung |
| 3 | Entlüftungsanschluss | 71 | Steuerkanal |
| 40 | Löseventil | 72 | Aussparung |
| 41 | Parkventil | 73 | Dichtung |
| 42 | Rückschlagventil | 74 | Entlüftungskanal |
| 43 | pneumatische Bremsanlage | 75 | Aussparung |
| 44 | Vorratsbehälter | 76 | Hohlraum |
| 45 | Notbremseinrichtung | 77 | Hohlraum |
| 46 | Federspeicherbremsen | 78 | Anschlag |
| 47 | Betriebsbremsen | 79 | Anschlag |
| 48 | Druckluftanschluss "Bremse" | 80 | Rückstellfeder |
| 49 | Druckluftanschluss "Vorrat" | 81 | Dichtfläche |
| 50 | Oder-Ventil | 82 | Dichtlinie |
| 51 | Antiblockier-Relaisventil | 83 | 2/2-Wegeventil |
| 52 | Anschluss | 84 | Rückschlagventil |
| 53 | Anschluss | 85 | Ventilanordnung |
| 54 | Anschluss | 86 | Ventilanordnung |
| 55 | Leitung | 87 | Schaltelement |
| 56 | Anschluss | 88 | Kragen |
| 57 | Anschluss | 89 | Dichtfläche |
| 58 | Anschluss | 90 | Verbindung |
| 59 | 2/2-Wegeventil | | |
| 60 | Steueranschluss | | |
| 61 | Eingang | | |
| 62 | Eingang | | |
| 63 | Steuereingang | | |
| 64 | obere Gehäusehälfte | | |
| 65 | untere Gehäusehälfte | | |

## Patentansprüche

1. Pneumatische Ventilanordnung (10, 85, 86) für ein Anhängefahrzeug mit Vorratsbehälter (44), Notbremseinrichtung (45) und Federspeicherbremsen (46), mit folgenden Merkmalen:
a) ein Versorgungsanschluss (1-1) zur Verbindung mit einer durch ein Zugfahrzeug gespeisten Druckluftversorgung,
b) ein Vorratsbehälteranschluss (1-2) zur Verbindung mit dem Vorratsbehälter (44),
c) ein Notbrems-Druckanschluss (21) zur Verbindung mit der Notbremseinrichtung (45),
d) ein Federspeicher-Druckanschluss (22) zur Verbindung mit den Federspeicherbremsen (46),
e) ein Entlüftungsanschluss (3),
f) ein Rückschlagventil (42, 84) zwischen Vorratsbehälteranschluss (1-2) und Federspeicher-Druckanschluss (22), mit einer Sperrwirkung zum Halten eines Drucks in den Federspeicherbremsen (46),
**dadurch gekennzeichnet, dass** die Sperrwirkung des Rückschlagventils (42, 84) aufhebbar ist, wobei die Sperrwirkung des Rückschlagventils (42, 84) unabhängig von wenigstens einem der nachfolgenden Kriterien aufhebbar ist:
- Schaltzustand der Notbremseinrichtung,
- Druck am Notbrems-Druckanschluss (21).

2. Ventilanordnung nach Anspruch 1, **dadurch gekennzeichnet, dass** wenigstens eines der nachfolgenden Ventile in die Ventilanordnung integriert ist:
- Parkventil (41),
- Löseventil (40).

3. Ventilanordnung nach einem der Ansprüche 1 und 2, **dadurch gekennzeichnet, dass** ein Parkventil (41) und ein Löseventil (40) in die Ventilanordnung integriert sind, wobei
a) ein Anschluss (52) des Löseventils (40) dem Versorgungsanschluss (1-1) zugeordnet ist,
b) ein Anschluss (53) des Löseventils (40) dem Notbrems-Druckanschluss (21) zugeordnet ist,
c) ein Anschluss (54) des Löseventils (40) mit einem Anschluss (56) des Parkventils (41) verbindbar ist,
d) ein Anschluss (57) des Parkventils (41) dem Federspeicher-Druckanschluss (22) zugeordnet ist,
e) ein Anschluss (58) des Parkventils (41) dem Entlüftungsanschluss (3) zugeordnet ist.

4. Ventilanordnung nach einem der Ansprüche 1 bis 3, **dadurch gekennzeichnet, dass** ein Parkventil (41) und ein Löseventil (40) in die Ventilanordnung integriert sind, und dass das Rückschlagventil (42, 84) in einer Leitung oder in einem Ventil (59) zwischen Parkventil (41) und Löseventil (40) vorgesehen ist.

5. Ventilanordnung nach Anspruch 4, **dadurch gekennzeichnet, dass** das Rückschlagventil (42) integriert ist in ein Wegeventil (59) mit mindestens zwei Anschlüssen und mindestens zwei Schaltstellungen.

6. Ventilanordnung nach Anspruch 4, **dadurch gekennzeichnet, dass** das Rückschlagventil (84) parallel zu einem Wegeventil (83) vorgesehen ist.

7. Ventilanordnung nach Anspruch 5 oder 6, **dadurch gekennzeichnet, dass** ein Steueranschluss (60) des Wegeventils (59) mit dem Versorgungsanschluss (1-1) verbunden ist.

8. Ventilanordnung nach Anspruch 5 oder 6, **dadurch gekennzeichnet, dass** ein Steueranschluss (60) des Wegeventils (59) mit dem Notbrems-Druckanschluss (21) verbunden ist.

9. Ventilanordnung nach Anspruch 5 oder 6, **dadurch gekennzeichnet, dass** ein Steueranschluss (60) des Wegeventils (59) mit dem Vorratsbehälteranschluss (1-2) verbunden ist.

10. Ventilanordnung nach Anspruch 6, **dadurch gekennzeichnet, dass** das Wegeventil (83) ein 2/2-Wegeventil mit den Funktionen "Durchlass" und "gesperrt" ist.

11. Pneumatische Bremsanlage mit einer Ventilanordnung nach einem der Ansprüche 1 bis 10.

12. Anhängefahrzeug mit einer pneumatischen Bremsanlage nach Anspruch 11.

## Claims

1. Pneumatic valve assembly (10, 85, 86) for a trailer vehicle having a reservoir (44), emergency brake device (45) and spring-loaded brakes (46), comprising the following features:
a) a supply port (1-1) for connection to a compressed-air supply fed by a towing vehicle,
b) a reservoir port (1-2) for connection to the reservoir (44),
c) an emergency brake pressure port (21) for connection to the emergency brake device (45),
d) a spring-loaded pressure port (22) for connection to the spring-loaded brakes (46),
e) a vent port (3),
f) a check valve (42, 84) between the reservoir port (1-2) and the spring-loaded pressure port (22), having a blocking effect for holding a pressure in the spring-loaded brakes (46),
**characterized in that** the blocking effect of the check valve (42, 84) can be terminated, it being possible for the blocking effect of the check valve (42, 84) to be terminated independently of at least one of the following criteria:
- switching state of the emergency brake device,
- pressure at the emergency brake pressure port (21).

2. Valve assembly according to claim 1, **characterized in that** at least one of the following valves is integrated in the valve assembly:
- parking valve (41),
- release valve (40).

3. Valve assembly according to either of claims 1 and 2, **characterized in that** a parking valve (41) and a release valve (40) are integrated into the valve assembly,
a) a port (52) of the release valve (40) being associated with the supply port (1-1),
b) a port (53) of the release valve (40) being associated with the emergency brake pressure port (21),
c) a port (54) of the release valve (40) being connectable to a port (56) of the parking valve (41),
d) a port (57) of the parking valve (41) being associated with the spring-loaded pressure connection (22),
e) a port (58) of the parking valve (41) being associated with the vent port (3).

4. Valve assembly according to any of claims 1 to 3, **characterized in that** a parking valve (41) and a release valve (40) are integrated into the valve assembly, **and in that** the check valve (42, 84) is provided in a line or in a valve (59) between the parking valve (41) and the release valve (40).

5. Valve assembly according to claim 4, **characterized in that** the check valve (42) is integrated into a directional valve (59) having at least two ports and at least two switching positions.

6. Valve assembly according to claim 4, **characterized in that** the check valve (84) is provided parallel to a directional valve (83).

7. Valve assembly according to claim 5 or 6, **characterized in that** a control port (60) of the directional valve (59) is connected to the supply port (1-1).

8. Valve assembly according to claim 5 or 6, **characterized in that** a control port (60) of the directional valve (59) is connected to the emergency brake pressure port (21).

9. Valve assembly according to claim 5 or 6, **characterized in that** a control port (60) of the directional valve (59) is connected to the reservoir port (1-2).

10. Valve assembly according to claim 6 **characterized in that** the directional valve (83) is a 2/2 directional control valve having the functions "open" and "blocked".

11. Pneumatic brake system comprising a valve assembly according to any of claims 1 to 10.

12. Trailer vehicle comprising a pneumatic brake system according to claim 11.

## Revendications

1. Agencement de soupapes pneumatique (10, 85, 86) pour un véhicule tracté comportant un réservoir de stockage (44), un dispositif de freinage d'urgence (45) et des freins à accumulateur à ressort (46), comportant les caractéristiques suivantes :
a) un raccord d'alimentation (1-1) pour le raccordement à une alimentation en air comprimé alimentée par un véhicule tracteur,
b) un raccord de réservoir de stockage (1-2) pour le raccordement au réservoir de stockage (44),
c) un raccord de pression de freinage d'urgence (21) pour le raccordement au dispositif de freinage d'urgence (45),
d) un raccord de pression d'accumulateur à ressort (22) pour le raccordement aux freins à accumulateur à ressort (46),
e) un raccord de ventilation (3),
f) une soupape antiretour (42, 84) entre le raccord de réservoir de stockage (1-2) et le raccord de pression d'accumulateur à ressort (22) comportant un effet de blocage permettant de maintenir une pression dans les freins à accumulateur à ressort (46),
**caractérisé en ce que** l'effet de blocage de la soupape antiretour (42, 84) peut être annulé, l'effet de blocage de la soupape antiretour (42, 84) pouvant être annulé indépendamment d'au moins l'un des critères suivants :
- état de commutation du dispositif de freinage d'urgence,
- pression au niveau du raccord de pression de freinage d'urgence (21).

2. Agencement de soupapes selon la revendication 1, **caractérisé en ce qu'**au moins l'une des soupapes suivantes est intégrée dans l'agencement de soupapes :
- soupape de stationnement (41),
- soupape de desserrage (40).

3. Agencement de soupapes selon l'une des revendications 1 et 2, **caractérisé en ce qu'**une soupape de stationnement (41) et une soupape de desserrage (40) sont intégrées dans l'agencement de soupapes, dans lequel
a) un raccord (52) de la soupape de desserrage (40) est associé au raccord d'alimentation (1-1),
b) un raccord (53) de la soupape de desserrage (40) est associé au raccord de pression de freinage d'urgence (21),
c) un raccord (54) de la soupape de desserrage (40) peut être raccordé à un raccord (56) de la soupape de stationnement (41),
d) un raccord (57) de la soupape de stationnement (41) est associé au raccord de pression d'accumulateur à ressort (22),
e) un raccord (58) de la soupape de stationnement (41) est associé au raccord de ventilation (3).

4. Agencement de soupapes selon l'une des revendications 1 à 3, **caractérisé en ce qu'**une soupape de stationnement (41) et une soupape de desserrage (40) sont intégrées dans l'agencement de soupapes, **et en ce que** la soupape antiretour (42, 84) est prévue dans une conduite ou dans une soupape (59) entre la soupape de stationnement (41) et la soupape de desserrage (40).

5. Agencement de soupapes selon la revendication 4, **caractérisé en ce que** la soupape antiretour (42) est intégrée dans un distributeur (59) comportant au moins deux raccords et au moins deux positions de commutation.

6. Agencement de soupapes selon la revendication 4, **caractérisé en ce que** la soupape antiretour (84) est prévue parallèlement à un distributeur (83).

7. Agencement de soupapes selon la revendication 5 ou 6,
**caractérisé en ce qu'**un raccord de commande (60) du distributeur (59) est raccordé au raccord d'alimentation (1-1).

8. Agencement de soupapes selon la revendication 5 ou 6,
**caractérisé en ce qu'**un raccord de commande (60) du distributeur (59) est raccordé au raccord de pression de freinage d'urgence (21).

9. Agencement de soupapes selon la revendication 5 ou 6,
**caractérisé en ce qu'**un raccord de commande (60) du distributeur (59) est raccordé au raccord de réservoir de stockage (1-2).

10. Agencement de soupapes selon la revendication 6, **caractérisé en ce que** le distributeur (83) est un distributeur 2/2 comportant les fonctions « passage » et « bloqué ».

11. Système de freinage pneumatique comportant un agencement de soupapes selon l'une des revendications 1 à 10.

12. Véhicule tracté comportant un système de freinage pneumatique selon la revendication 11.
